(19)

**Europäisches Patentamt**
**European Patent Office**
**Office européen des brevets**

(11) **EP 3 951 525 A1**

(12) **EUROPEAN PATENT APPLICATION**

(43) Date of publication:
**09.02.2022  Bulletin 2022/06**

(21) Application number: **20190026.3**

(22) Date of filing: **07.08.2020**

(51) International Patent Classification (IPC):
***G05B 19/418*** (2006.01)

(52) Cooperative Patent Classification (CPC):
**G05B 19/41865**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens AG Österreich**
**1210 Wien (AT)**

(72) Inventors:
• **Friedrich, Gerhard**
  **9201 Krumpendorf (AT)**
• **Taupe, Richard**
  **3454 SITZENBERG-REIDLING (AT)**
• **Weinzierl, Antonius**
  **1130 Wien (AT)**

(74) Representative: **Maier, Daniel Oliver**
**Siemens AG**
**Postfach 22 16 34**
**80506 München (DE)**

(54)   **COMPUTER-IMPLEMENTED METHOD AND SYSTEM TO MANUFACTURE A PRODUCT**

(57)   Computer-implemented method to manufacture a product by a set of production machines with a configuration thereof, wherein following steps:

a) Apply the CDNL technique to solve (10) a provided ASP encoding stored in the memory, using manufacturing properties of the set of production machines and a manufacturing plan for the product as a manufacturing problem, wherein the ASP encoding is representing the manufacturing problem including constraints,

b) check (20) whether a conflict exists at solving the problem in step a),

if conflict exists (21), continue with step c), and if no conflict exists (22), continue with step g),

c) classify conflict (30) to obtain constraints with variables,

d) apply resolution technique (40) to transform the constraint, in order to determine a more generalized constraint with variables at an UIP,

e) store constraint (50) in a memory,

f) continue with step a),

g) determine (60) the constraints in the memory, which were produced from generalized conflict most often occurring,

h) add (70) determined constraints from step g) to encoding and apply CDNL technique to solve the ASP encoding,

i) manufacture (80) the product using the configuration obtained by step h) with the at least one machine of the set of production machines.

FIG 3

## Description

The invention relates to a computer-implemented method to manufacture a product by a set of production machines with an optimal configuration thereof, and a related manufacturing system.

The future of industrial production of products, items and devices in a flexible production with highly flexible quantities using multi-purpose production machines.

A production site should provide a multiplicity of redundant production capabilities for similar production steps.

Each product can be produced on several machines providing the related production capability for executing a certain production step, wherein the necessary materials are provided.

Flexible logistic steps connect individual production machines. Thus, a product can be produced according to building instructions and defined materials.

At such a scenario one difficulty remains, namely, to find the optimal configuration of machines for producing the needed product.

To solve this problem, answer set programming can be used, but the complexity of finding an optimal configuration can be high.

ASP ("answer set programming") is a declarative program based on "logic programming", which deals with difficult, especially at NP level (mostly NP-hard), search problems. It is therefore non-monotonous reasoning. It was written based on the semantics of the stable model (answer set) of logic programming. ASP can be used, for example, for automatic planning and for solving configuration problems.

In ASP, search problems are reduced to calculating stable models, and answer set solvers - programs for generating stable models - are used to perform the search. The calculation process used when designing many answer set solvers is an improvement on the DPLL algorithm and is basically always finite (as opposed to the Prolog query rating, which can lead to an infinite loop).

Conflict-Driven Nogood Learning (CDNL) is a major success factor for high-performance state-of-the-art ASP systems. When a conflict occurs, new propositional nogoods are learned that prevent the same conflict from re-occurring, which improves search performance.

Previous work has failed to address the question whether learned nogoods can be generalized and re-used to speed up the solving of different instances of the same problem.

Known solutions based on ASP provide quite good performance, but there is still room for further improvement.

It is the objective of the invention to close this gap. In other words, the invention should find in more efficient way a configuration to produce an item with a set of production machines using the ASP paradigm.

The objective of the invention is solved by a computer-implemented method to manufacture a product by a set of production machines with a configuration thereof, wherein following steps are executed:

> a) Apply the CDNL technique to solve a provided ASP encoding stored in the memory, using manufacturing properties of the set of production machines and a manufacturing plan for the product as a manufacturing problem, wherein the ASP encoding is representing the manufacturing problem including constraints,
> b) check whether a conflict exists at solving the problem in step a),

> if conflict exists, continue with step c), and
> if no conflict exists, continue with step g),

> c) classify conflict to obtain constraints with variables,
> d) apply resolution technique to transform the constraint, in order to determine a more generalized constraint with variables at an UIP,
> e) store constraint in a memory,
> f) continue with step a),
> g) determine the constraints in the memory, which were produced from generalized conflict most often occurring,
> h) add determined constraints from step g) to encoding and apply CDNL technique to solve the ASP encoding,
> i) manufacture the product using the configuration obtained by step h) with the at least one machine of the set of production machines.

According to the invention, the constraints achieved in step g) may provide an improved solving speed at future runs of the ASP solver (including step h).

The objective of the invention is also solved by a manufacturing system, comprising a set of production machines and a computer with a memory, wherein the computer and at least one machine of the set of production machines are configured to perform the steps of the computer-implemented method according to the invention.

The invention extends CDNL that learns non-ground constraints. The idea is that whole parts of the search tree can be pruned when these learned constraints are added to the original program.

It is presumed that the common distinction between an unvarying problem encoding and separate inputs consisting only of facts. A problem instance is specified by the problem encoding and a set of input facts.

The objective is to derive non-ground constraints from the problem encoding that are valid for all possible inputs and which can be employed to speed up solving.

CDNL and Explanation-Based Learning (EBL) is the starting point.

EBL is a well-known logic-based machine learning technique which learns first-order rules that are entailed by the background knowledge (i.e. the problem encoding).

CDNL is combined with EBL to learn non-ground nogoods while solving prior problem instances.

Since the number of generalized nogoods can be overwhelming, choosing those that will actually pay off is particularly challenging.

The basic idea is to generalize those non-ground conflicts that occur most often, i.e., to generalize propositional nogoods learned from frequently violated nogoods. The underlying assumption is that nogoods learned from frequent conflicts will also be able to prevent many conflicts.

A realistic hardware configuration example and a graph coloring problem are used for demonstration and experimentation purposes. Results show that both lazy-grounding and ground- and-solve systems benefit from our approach. By adding learned constraints to the problem encodings, up to 64% more configuration instances and more than 300% more graph coloring instances can be solved. Learning itself requires low computational resources.

An answer-set program $P$ is a finite set of non-ground rules of the form:

$$h \leftarrow b_1, ..., b_m, \text{not } b_{m+1}, ..., \text{not } b_n \qquad \langle 1 \rangle$$

where $h$ and $b_1,...,b_n$ are atoms. A classical atom is an expression $p(t_1 ... t_n)$, where $p$ is an $n$-ary predicate and $t_1, ..., t_n$ are terms.

A term is a variable, a constant, or a complex term involving arithmetic.

A NaF-literal is either an atom $a$ or its negation not $a$.

Negation as failure (NaF) refers to the absence of information, i.e., an atom is assumed to be false as long as it is not proven to be true. If $l$ is a literal, then $\overline{l}$ denotes its complement (i.e., $\overline{\text{not } a} = a$ and $\overline{a} = \text{not } a$.

Given a rule $r$, $H(r) = \{h\}$ is called the *head* of $r$, and $B(r) = \{b_1, ..., b_m, \text{not } b_{m+1}, ..., \text{not } b_n\}$ is called the *body* of $r$.

The positive body of $r$ is denoted by $B^+(r) = \{b_1, ..., b_m\}$ and its negative body by $B^-(r) = \{b_{m+1}, ..., b_n\}$.

A rule $r$ where the head is absent ($H(r) = \{ \}$), e.g., $\leftarrow b.$, is called *constraint*.

A rule $r$ where the body is absent ($B(r) = \{ \}$), e.g., $h \leftarrow.$, is called *fact*.

Given an answer-set program $P$, the *universe of P*, denoted by $U_P$, is the set of constants appearing in $P$.

By $\mathcal{A}$ the set of classical atoms is denoted constructible from predicates of $P$ with constants in $U_P$.

The set of all literals is denoted by

$$\mathcal{L} = \mathcal{A} \cup \{\text{not } a | a \in \mathcal{A}\}$$

The vars function maps any structure containing variables to the set of variables it contains, e.g., for a rule $r_1: a(X) \leftarrow b(X, Y).$, $vars(r_1) = \{X, Y\}$.

The set $V \supset vars(P)$ includes all variables from a program and also variables that can additionally be used by a solver, it is usually infinite.

A literal $l$ or rule $r$ is ground if $vars(l) = \emptyset$ or $vars(r) = \emptyset$, respectively.

A program $P$ is ground if all its rules $r \in P$ are.

A *substitution* $\sigma: V \rightarrow V \cup U_P$ is a mapping from variables to variables or constants.

A substitution is called *grounding* for a set of variables $V \subseteq V$ if for every $v \in V$ there exists a constant $c \in U_P$ s.t. $\sigma(v) = c$.

The function $v_A: \mathcal{A} \rightarrow \{T, M, F, U\}$ for a (partial) assignment A maps an atom to the truth value the atom is currently assigned in the given assignment (M stands for must-be-true and U for currently unassigned).

A nogood is a set of Boolean signed literals $\{Ta_1, ..., T a_n, ... , Fa_{n+1}, ... Fa_m\}$ which means that an answer set may not satisfy all the literals in the nogood.

A nogood is violated by an assignment A if $v_A(a_i) \in \{T, M\}$ for all $i \in \{1, ..., n\}$ and $v_A(a_j) = F$ for all $j \in \{n + 1, ..., m\}$.

Sometimes, nogoods is represented not by sets but by fixed-order multisets, because there is a need of the possibility of duplicates and of fixed positions to be able to map literals between ground and non-ground nogoods.

When this is the case, $\omega[i]$ denotes the literal at position $i$ in nogood $\omega$.

For ASP semantics, it is referred to FABER, W., PFEIFER, G., AND LEONE, N. 2011, Semantics and complexity of recursive aggregates in answer set programming, Artif. Intell. 175, 1, 278-298.

Aggregates and choice rules are common extensions to the input language of ASP, e.g. by CALIMERI, F., FABER, W., GEBSER, M., IANNI, G., KAMINSKI, R., KRENNWALLNER, T., LEONE, N., MARATEA, M., RICCA, F., AND SCHAUB, T. 2020. ASP-Core-2 input language format, Theory Pract. Log. Program. 20, 2, 294-309.

A choice rule expresses that a subset of a set of atoms will be included in an answer set. This does not clash with the subset-minimality of answer sets because choice rules are translated to normal rules involving additional atoms whose predicates, we call choice predicates.

For simplicity, only choice rules without bounds are considered (which are the only ones currently supported by ALPHA).

A choice rule is of the form $\langle l \rangle$, but the head $h$ is not a classical atom but a choice atom of the form $\{C_1; ... ; C_n\}$ where for $n > 0$ and $0 \leq i < n$ each $C_i$ is a *choice element.*

A choice element has the form $a{:}l_1, ..., l_k$ where $a$ is a classical atom and $l_1, ..., l_k$ are literals for $k \geq 0$. If the body of a choice rule is satisfied, it means that for each $C_i$ where the literals $l_1, ..., l_k$ are satisfied, the atom a may or may not be true in an answer set.

A choice rule $r$ can be translated to $2n$ rules, two for each choice element $a{:}l_1, ..., l_k$ :

$$a \leftarrow B(r), l_1, ..., l_k, \text{not } \hat{a}$$

$$\hat{a} \leftarrow B(r), l_1, ..., l_k, \text{not } a$$

For both aggregates and choice rules, see Calimeri et al. (2020) for details.

The goal of the invention is to generate non-ground nogoods which can be re-used for solving further problem instances.

More formally, let $P^E$ be an ASP problem encoding.

*InPred* and *OutPred* are sets of predicate symbols with defined arities.

The input for $P^E$ is specified by a set of ground facts *InA* containing only predicate symbols from *InPred*.

The output of a problem instance $P^E \cup InA$ is the set of atoms of a stable model whose predicate symbols are in *OutPred.*

A conflict for an ASP program $P$ is a constraint $C$ s.t. $P \vDash_S C$ where $\vDash_S$ refers to the skeptical ASP semantic, i.e., $C$ must be true in all stable models of $P$.

A generalized conflict of $(P^E, InPred)$ is a constraint $GC$ s.t. $P^E \cup InA \vDash_S GC$ for all finite sets of ground facts *InA* whose predicate symbols are in *InPred.*

Let $\vDash_F$ be the implication relation based on standard FOL semantic. Since every stable model of an ASP program $P$ is also a model for $P$ if $P$ is interpreted as an FOL program, it follows that if $P \vDash_F C$ then $P \vDash_S C$.

It is well known that every stable model of $P$ is also a model of $P \cup comp(P)$, i.e., the extension of $P$ by the axioms of the Clark completion. Note that for problem instances $P^E \cup InA$ the Clark completion changes depending on *InA*.

Since conflicts which are independent of the input are of interest, only the completion of the head literals is considered which appear in $P^E$ but not in *InPred*.

It is denoted that this restricted Clark completion for a program $P$ and input predicates *InPred* as $rComp(P, InPred)$.

It holds that $rComp(P, InPred) \subseteq comp(P)$ and $P^E \cup rComp(P^E \cup InA, InPred)$ is the same for all problem instances $P^E \cup InA$.

Let a problem be defined by $(P^E, InPred)$ and $C$ is a conflict.

If $P^E \cup rComp(P, InPred) \vDash_F C$ then $C$ is a generalized conflict of $(P^E, InPred)$.

Proof sketch: Since $rComp(P, InPred)$ depends only on $P$, it holds that if $P^E \cup rComp(P, InPred) \vDash_F C$ then $P^E \cup rComp(P, InPred) \vDash_F C$ where *InA* is a finite set of ground facts whose predicate symbols are in *InPred*. Because every stable model of $P^E \cup InA$ is also a model for $P^E \cup rComp(P, InPred) \cup InA$ under FOL semantic and $C$ is true in these models it follows that $P^E \cup InA \vDash_S C$.

Conflict-Driven Clause Learning (CDCL) is a SAT solving technique that extends DPLL by conflict analysis and enables the solver to learn new clauses and to do non-chronological back-tracking ("backjumping").

Further details are published by SILVA, J. P. M., LYNCE, I., AND MALIK, S. 2009; LINTAO ZHANG, MADIGAN, C. F., MOSKEWICZ, M. H., AND MALIK, S. 2001, Efficient conflict driven learning in a Boolean satisfiability solver, in ICCAD. IEEE, 279-285 and Conflict-driven clause learning SAT solvers, in Handbook of Satisfiability, IOS Press, 131-153)

While the original definitions of CDCL are based on clauses, i.e., disjunctions of literals, the notion of nogoods and speak of Conflict-Driven Nogood Learning (CDNL) is used (GEBSER, M., KAUFMANN, B., AND SCHAUB, T. 2012. Conflict-driven answer set solving: From theory to practice, Artif. Intell. 187, 52-89).

The two variants are equivalent since the conjunction of classically negated nogoods can be directly transformed to an equivalent conjunction of clauses by applying De Morgan's laws.

CDCL- and CDNL-based solvers usually characterize each atom $a \in \mathcal{A}$, by the following properties: its truth *value,* its antecedent clause, and its *decision level,* denoted respectively by $v_A(a) \in \{T,F,M,U\}$,

$\alpha(a) \in 2^{\mathcal{L}} \cup \{\text{NIL}\}$, and $\delta(a) \in \{-1,0,1,...,|\mathcal{A}|\}$.

The truth value of an atom is the value currently assigned to it. By the *antecedent clause* of an atom we mean the cause of its current truth value. The antecedent clause of an atom whose current truth value has been implied is the nogood that was unit at the time the implication happened and thus forced the atom to assume its current value. The value NIL is used instead if the current truth value of an atom results from a heuristic decision.

The decision level of an atom denotes the depth of the decision tree at which it has been assigned, and -1 if the atom is unassigned.

The decision level of a literal is the same as the literal's atom's decision level ($\delta$(not $a$) = $\delta$($a$)), and the antecedent of a literal is the one of its atom ($\alpha$(not $a$) = $\alpha$($a$)). An assignment's decision level is the decision level of the atom most recently assigned.

When a nogood is violated during solving (i.e., all literals in the nogood are satisfied), the conflict is analyzed and a new nogood may be learned.

Learning starts with the violated nogood and resolves one literal assigned at the current (most recent) decision level with its antecedent.

This is repeated with the nogood resulting from resolution (the "resolvent") as long as it is possible.

Resolution stops when the only literal in the resolvent that has been assigned at the current decision level is a decision literal, i.e., its antecedent is NIL. The resulting nogood is then "learned", i.e., added to the set of known nogoods, and the solver executes a backjump.

*First UIP clause learning* is a modification of this algorithm that already stops resolution when only one literal from the current decision level remains in the nogood, even if its antecedent is not NIL. This is correct because this literal is a unique implication point (UIP), a node in the implication graph that lies on every path from the last decision to the conflict. Each UIP could be used to learn a new nogood, but modern SAT solvers stop already at the first UIP, i.e., the one nearest to the conflict.

Explanation-Based Learning (EBL), a.k.a. Explanation-Based Generalization (EBG), is a logic based learning technique that, in contrast to Inductive Logic Programming (ILP), learns only general rules that are entailed by background knowledge alone (and not by background knowledge together with some new hypotheses).

Therefore, in EBL nothing factually new is learned from the example.

In EBL, two proof trees are created simultaneously (one for the concrete example and one with variables instead of constants).

Then, new rules can be obtained from the non-ground proof tree.

The *operationality criterion* is a restriction which predicates can be used to express the learned rules.

The purpose of operationality is to use only predicates that are easy to solve.

A trade-off between operationality and generality is usually an issue in EBL.

By choosing adequate general rules, EBL makes a knowledge base more efficient for the kind of problems that one would reasonably anticipate (MITCHELL, T. M., KELLER, R. M., AND KEDAR-CABELLI, S. T. 1986, Explanation-based generalization: A unifying view. Mach. Learn. 1, 1, 47-80; DEJONG, G. AND MOONEY, R. J. 1986. Explanation-based learning: An alternative view. Mach. Learn. 1, 2, 145-176; HIRSH, H. 1987, Explanation-based generalization in a logic-programming environment, in IJCAI, Morgan Kaufmann, 221-227; MITCHELL, T. M. 1997, Machine learning, International Edition, McGraw-Hill Series in Computer Science, McGraw-Hill; RUSSELL, S. J. AND NORVIG, P. 2010, Artificial Intelligence - A Modern Approach, Third International Edition, Pearson Education.

In the publication VAN HARMELEN, F. AND BUNDY, A. 1988. Explanation-based generalization = partial evaluation, Artif. Intell. 36, 3, 401-412 is shown that EBL/EBG and Partial Evaluation (PE) are equivalent to each other in the context of logic programming.

PE is a program optimization method that reformulates an input program in an equivalent but more efficient way.

WEINZIERL, A. 2013. Learning non-ground rules for answer-set solving. In 2nd Workshop on Grounding and Transformations for Theories With Variables. 25-37 employs PE (and terms it "unfolding" of rules) in lazy-grounding answer set solving to learn new rules during solving. Learning is triggered by conflicts to prevent future occurrences of similar conflicts.

Learned rules are constructed from constraints that are almost violated and in which atoms have been replaced by their definitions: The single literal in the constraint's body that is not yet satisfied must not be satisfied. Learned rules are created and used online during solving.

The invention is explained in more detail below with reference to an exemplary embodiment shown in the accompanying drawings. In the drawings shows

Fig. 1    an ASP encoding of the House Configuration Problem,

Fig. 2    a pseudo code of an embodiment of the invention,

Fig. 3    an embodiment of the invention in Form of a flow chart.

As an embodiment of the invention, the House Configuration Problem (HCP) serves as a motivating example.

See https://sites.google.com/view/aspcomp2019/problem-domains, FRIEDRICH, G., RYABOKON, A., FALKNER, A. A., HASELBOECK, A., SCHENNER, G., AND SCHREINER, H. 2011. (Re)configuration using answer set programming, in Configuration Workshop, CEUR-WS.org (2011), and RYABOKON, A. 2015. Knowledge-based (re)configuration of complex products and services, Ph.D. thesis, Alpen-Adria-University Klagenfurt (2015) for more complete descriptions of the problem.

It is an abstraction of real-world hardware configuration problems and defined as follows:

Given an association of things to the persons they belong to, a domain of cabinet IDs, and a domain of room IDs, the task is to assign things to cabinets and cabinets to rooms such that there are at most five things in each cabinet and at most four cabinets in each room, and each room only contains things that belong to the same person. Input facts of predicates personTOthing/2, cabinetDomain/1, and roomDomain/1 vary from instance to instance. Each answer set specifies one valid configuration.

Further considerations are guided by the original definition of HCP by Friedrich et al. (2011) and limited to the configuration aspects of the problem, neglecting reconfiguration for presentation purposes.

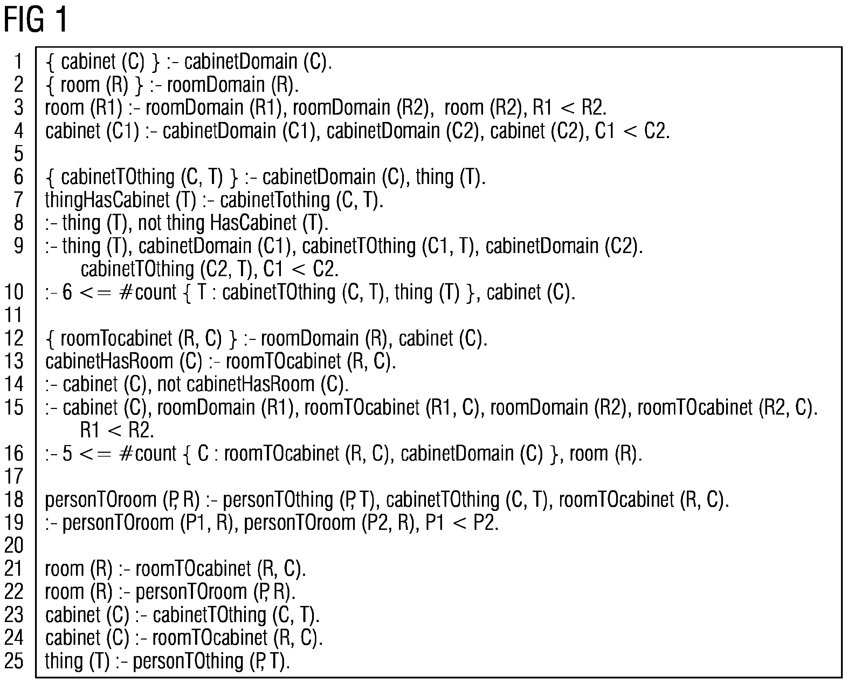

The complete encoding is given in **Fig. 1**, wherein variables have been renamed for this paper and some simplifications have been made.

Ryabokon (2015) added the following redundant constraint to the problem:

$$\leftarrow \mathrm{cabinetTOthing}(C, T1), \mathrm{personTOthing}(P1, T1),$$
$$\mathrm{cabinetTOthing}(C, T2), \mathrm{personTOthing}(P2, T2), P1 < P2 \qquad \langle 2 \rangle$$

However, this constraint can be learned automatically. Using ALPHA (WEINZIERL, A. 2017. Blending lazy-grounding and CDNL search for answer-set solving, in LPNMR, LNCS, vol. 10377, Springer, 191-204) to solve the smallest instance, the nogood that is violated most often and thus leads to the highest number of conflicts is {$T$ personTOroom($P1$, $R$), $T$ personTOroom($P2$, $R$), $P1 < P2$} which corresponds to the constraint in Line 19 of Fig. 1. This constraint forbids things of two different persons $P1$ and $P2$ from ending up in the same room $R$. Using our method, the following non-ground constraint can be learned at the first UIP of the implication graphs of all these conflicts:

$$\leftarrow \mathrm{roomTOcabinet}(R, C), \mathrm{cabinetTOthing}(C, T1), \mathrm{personTOthing}(P1, T1),$$
$$\mathrm{cabinetTOthing}(C, T2), \mathrm{personTOthing}(P2, T2), P1 < P2 \qquad \langle 3 \rangle$$

This constraint can also be easily generated by applying the rule in Line 18 to the constraint in Line 19 of Fig. 1 and by factorizing different literals of predicate roomTOcabinet/2.

The automatically learned constraint $\langle 3 \rangle$ is almost identical to the human-created one $\langle 2 \rangle$. However, it includes one additional literal roomTOcabinet($R$, $C$).

Learned non-ground constraints can be minimized by employing axioms of the Clark completion (SHEPHERDSON, J. C. 1984. Negation as failure: A comparison of Clark's completed data base and Reiter's closed world assumption, J. Log. Program. 1, 1, 51-79).

The Clark completion of a logic program is computed by completing the head literals of the clauses of the program, including the completion of facts. Every stable model of a program P must also satisfy the Clark completion *comp*(P).

For example, the completion of cabinetHasRoom($C$) is $\exists R$: roomTOcabinet($R$, $C$) $\leftarrow$ cabinetHasRoom($C$).

To minimize the learned nogood by resolution we substitute the existential quantifier by a Skolem function resulting in the rule roomTOcabinet($r(C)$, $C$) $\leftarrow$ cabinetHasRoom($C$).

To minimize the conflict, it must be proven that constraint $\langle 2 \rangle$ is entailed. This is achieved by showing that the program in Fig. 1 becomes unsatisfiable when the negation of constraint $\langle 2 \rangle$ is added to this program.

Consequently, it is sufficient to show that the program becomes unsatisfiable when the facts cabinetTOthing($c$,

*t*1), personTOthing(*p*1, *t*1), cabinetTOthing(*c*, *t*2), personTOthing(*p*2, *t*2), *p*1 < *p*2 are added, where *c,t*1*,t*2*,p*1 and *p*2 are Skolem constants.

Every stable model of an ASP program is also a model of the program interpreted under the standard first-order logic (FOL) semantic. Consequently, if a program is unsatisfiable under FOL semantics, it is also unsatisfiable skeptical ASP semantics.

From cabinetTOthing(*c,t*1) and the rule in Line 23 cabinet(*c*) can be deduced.

From the constraint in Line 14 of Fig. 1, cabinetHasRoom(*c*) can be deduced interpreting the sentences in Fig. 1 as FOL clauses.

Exploiting the rule provided by the Clark completion of cabinetHasRoom(*c*) as shown above, roomTOcabinet(*r*(*c*),*c*) can be deduced.

Finally, using all the deduced and given facts, constraint ⟨3⟩ is violated.

Since this constraint is implied by the program and we have shown that it is violated if the negation of constraint ⟨2⟩ is added, constraint ⟨2⟩ is implied.

As a result, we have shown that indeed the learned non-ground constraint can be reduced by dropping roomTOcabinet(*R, C*).

The invention foresees to combine CDNL with EBL to facilitate the learning of general (i.e., non-ground) constraints. This can be done online (during solving), or offline. In the latter case, learned constraints are computed and recorded. A selection can then be made, for example either automatically based on metrics or by a human, and useful constraints can be added to the original program to improve solving performance in the future.

In this section, it is described how offline conflict generalization can be implemented in an ASP solver and exemplify this by means of a prototypical implementation in the lazy-grounding system ALPHA (Weinzierl 2017).

The constraints learned by this method can be used by any ASP system, not only by the system employed for the learning task, because they are stated in pure ASP-Core-2 (Calimeri et al. 2020), using only predicates from the original program.

Parallelly conducting CDNL on the ground level and on the non-ground level when a conflict is encountered is the basic idea of combining CDNL with EBL to generalize learned nogoods.

A key requirement for this is that for each ground nogood, a corresponding non-ground nogood is known that can be used for non-ground resolution.

Thus, it is shown to maintain non-ground nogoods in ALPHA. This can be implemented similarly in any other ASP system.

In ALPHA, there are five types of nogoods:

- *static* nogoods that represent ground rules and are generated by the grounder,
- *support* nogoods that encode the situation that the body-representing atom of a rule must be true if the head of the rule is true,
- *learned* nogoods originating from CDNL,
- *justification* nogoods learned by justification analysis (BOGAERTS, B. AND WEINZIERL, A. 2018, Exploiting justifications for lazy grounding of answer set programs, in IJCAI. ijcai.org, 1737-1745),
- and *internal* nogoods containing solver-internal atoms.

Non-ground nogoods for *static* and *support* nogoods are produced by the grounder as described in the following paragraphs.

Non-ground nogoods for *learned* nogoods are produced by the conflict generalization procedure that is the main contribution of this paper.

Non-ground nogoods are not maintained for justification nogoods (because these nogoods depend too heavily on the specific problem instance) and for internal nogoods (because these are irrelevant to CDNL).

Thus, non-ground nogoods for static and support nogoods are produced by the grounder.

Let *r* be a rule of the form ⟨1⟩ and $\sigma$ be a substitution that is grounding for *vars*(*r*).

The grounder produces a ground rule *r*$\sigma$ from *r* if no fact and no fixed-interpretation literal makes the body of *r*$\sigma$ false.

Because of this, facts and fixed-interpretation literals are actually omitted from the ground rule produced by the grounder. For simplicity of presentation, however, it is assumed here that the grounder does not eliminate any atoms known to be true from generated nogoods.

This ensures a one-to-one relationship between literals in ground nogoods and literals in nonground nogoods. Additional effort is necessary to map from ground literals to non-ground literals if true literals are eliminated from ground nogoods, but this is purely a matter of implementation.

Not eliminating any literals from non-ground nogoods, however, is crucial.

A body-representing atom $\beta(r, \sigma)$ is created for every ground rule *r*$\sigma$. Similarly, $\beta(r,vars(r))$ is a fictitious atom representing the body of a non-ground rule *r*. The latter atom contains a term that lists all the variables that occur in the rule *r*, so that they can affect unification when a body-representing literal is used for resolution.

The following static nogoods are produced by the grounder from a rule r and a grounding substitution s (LEUTGEB, L. AND WEINZIERL, A. 2017. Techniques for efficient lazy-grounding ASP solving, in DECLARE, LNCS, vol. 10997. Springer, 132-148) :

$$\{F\ \beta(r,\sigma), Tb_1\sigma, \dots, T\ b_m\sigma, F\ b_{m+1}\sigma, \dots, F\ b_n\sigma\} \qquad \langle 4 \rangle$$

$$\{F\ h\sigma, T\ \beta(r,\sigma)\} \qquad \langle 5 \rangle$$

$$\{T\ \beta(r,\sigma), F\ b_1\sigma\}, \dots, \{T\ \beta(r,\sigma), F\ b_m\sigma\} \qquad \langle 6 \rangle$$

$$\{T\ \beta(r,\sigma), F\ b_{m+1}\sigma\}, \dots, \{T\ \beta(r,\sigma), F\ b_n\sigma\} \qquad \langle 7 \rangle$$

$$\{T\ h\sigma, F\ \beta(r,\sigma)\} \qquad \langle 8 \rangle$$

Nogood $\langle 8 \rangle$ is a so-called *support nogood* and is produced by ALPHA currently only when an atom occurs in the head of just a single rule. If *r* is a constraint, only one nogood is created, which consists of the whole body of *r*$\sigma$.

As a prerequisite for conflict generalization, a solver must associate each ground nogood with a non-ground nogood. This non-ground nogood is obtained from a non-ground rule the same way as a ground nogood is obtained from a ground rule. This means that the non-ground nogoods are exactly the same ones as given above, except the substitution s does not appear anywhere: The atom $\beta(r, \sigma)$ becomes $\beta(r, vars(r))$, and any other ground atom $a\sigma$ becomes just *a*.

This describes "conflict generalization" or "conflict classification", i.e. the assignment of ground to non-ground nogoods, which is part of a conflict.

Further below it is described how to extend CDNL to learn non-ground nogoods. The non-ground nogoods learned that way can then just be used as constraints and be added to the original program.

When learning only constraints and no other kinds of rules, *F* in nogoods can just be replaced by negation as failure.

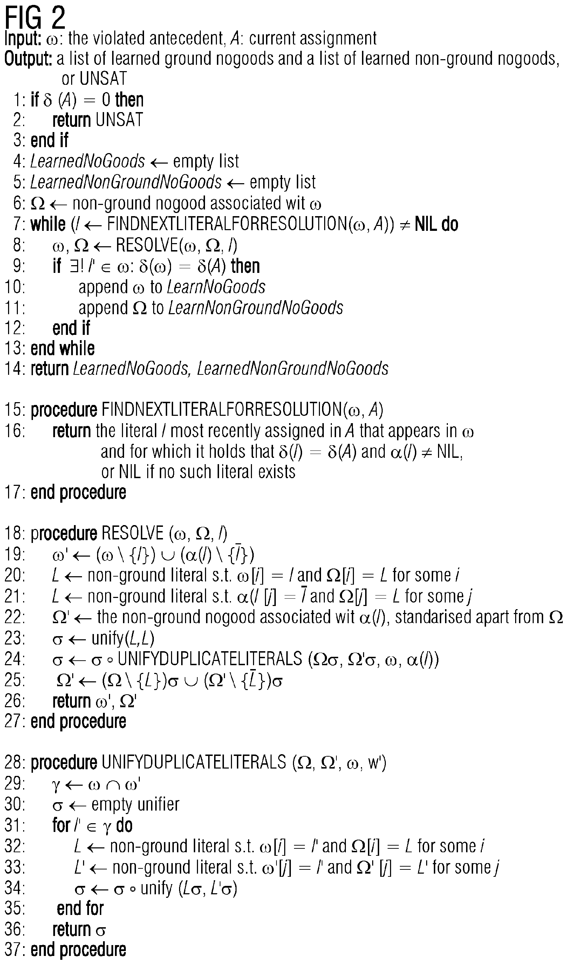

An embodiment according to the invention of a conflict generalization algorithm is shown in **Fig. 2.**

Nogoods are represented by fixed-order multisets to be able to map between literals in ground and non-ground nogoods.

The algorithm takes as input a violated ground nogood $\omega$ and the current assignment *A*.

The "conflict generalization" or "conflict classification" takes place in Line 6.

Since constraints equal in the present example de facto Nogoods, the generation of explicit constraints cannot be seen directly in the code.

The newly learned constrain is recorded, i.e. stored in Line 11.

The transformation of the conflict is represented by the procedure RESOLVE.

If the conflict occurred at decision level 0, UNSAT is returned in Line 2, otherwise two lists of learned nogoods are returned in Line 14.

The first list contains ground nogoods and the second list contains nonground nogoods.

Each element of both lists corresponds to one UIP and both lists are ordered by distance from the conflict, i.e., the first element of both lists is a nogood learned at the first UIP and the last element of both lists is a nogood learned at the last UIP.

As long as the current nogood contains a literal from the current decision level3 with non-NIL antecedent (Line 7), it is resolved with the antecedent of such a literal to produce a new current nogood $\omega$ (the resolvent, Line 8). If $\omega$ contains exactly one literal on the current decision level (Line 9), a UIP is found and remember the current nogood (both ground and non-ground).

Resolution of ground nogoods is straightforward and well-known (Line 19): The resolvent is the union of two input nogoods ($\omega$ and the antecedent of *l*, $\alpha(l)$, minus *l* that occurs in the first input nogood and its complement $\bar{l}$ that occurs in the second input nogood.

Following the resolution on the non-ground level is more complex, however, and several special cases have to be considered. First, the non-ground nogood corresponding to $\alpha(l)$ is identified and standardized apart from the current nogood (i.e., variables are renamed to avoid overlaps; Line 22).

If no non-ground nogood is available for $\alpha(l)$, conflict generalization can continue with another literal from the current decision level or just learn the current resolvent.

Then, two steps of unification are necessary: First, in Line 23, the two complementary resolution literals are unified s.t. variable occurrences are correctly updated in the resolvent.

Then, an additional step is necessary only on the non-ground level: If the two-ground input nogoods share some literals, duplicates are just removed during resolution, because a nogood is a set of literals. On the non-ground level, however, for each ground literal that occurs in both input nogoods, the corresponding non-ground literals must be unified before one of them can be removed (Line 24). This is a restricted form of factoring that is guided by ground resolution. Note that in the context of CDNL, it is not possible for two input nogoods to contain complementary literals apart from the resolution literal, because all antecedents must be unit to entail a literal.

Finally, after applying the computed unifier to both non-ground nogoods, the resolution step is the same as on the ground level (Line 25).

The connection between our suggestion of non-ground CDNL and EBL becomes apparent when viewing the violated nogood as the training instance.

The implication graph utilized by CDNL constitutes a proof that the nogood is violated by giving a derivation for each literal in the nogood. Each arc in the implication graph that originates from unit propagation can be seen as a definite Horn clause that derives the literal assigned by the propagation step.

Operationality in the present setting is specified by demanding that nogoods are only learned at UIPs. The set of predicates allowed in learned nogoods is not restricted, because in ASP there are no predicates that are "easier to solve" than others. In lazy grounding, rules are even grounded only when (part of) their body is already satisfied (Taupe et al. 2019), which alleviates the overhead of additional rules. Currently, facts from the ASP program are not regarded by our approach because they are not included in nogoods generated by state-of-the-art answer-set solvers. This ensures that learned constraints depend only on the rules from the problem encoding.

The algorithm of Fig. 2 is correct because it derives constraints that are implied when the input program P is interpreted as an FOL program, and because such constraints are also true in all stable models of *P*, as has been discussed before.

Next, it is described how internal atoms in learned constraints are replaced.

Learned constraints may contain literals of solver-internal predicates. Literals of two kinds of such predicates, namely body-representing and choice predicates, can easily be replaced by equivalent (sets of) literals of predicates from the problem encoding. Only then can resulting constraints be correctly added to the input program.

A body-representing atom such as $\beta(r, vars(r))$ represents the body of non-ground rule *r*. If a nogood contains a positive literal of such an atom, by definition this literal can just be replaced by the body of *r*. This is equivalent to resolving with nogood ⟨4⟩ above. If the head of *r* is the head of no other rule, $\beta(r, vars(r))$ can also be replaced by $H(r)$ by resolving with the support nogood ⟨8⟩. If a nogood contains a negative literal of a body-representing atom, it can be replaced by the negated head of *r* (which is equivalent to resolving with nogood ⟨5⟩ above) or by an arbitrary negated body literal of *r* (equivalent to resolving with any of the nogoods in ⟨6⟩ or ⟨7⟩).

For choice rules, internal literals of a different kind are created, as has been described before. Because of this, atoms $\hat{a}$ may occur in learned nogoods. Due to the way choice rules are translated to normal rules, the literal $F\,\hat{a}$ is equivalent to $T\,a$ and can simply be replaced. Similarly, $T\,\hat{a}$ is equivalent to $F\,a$.

Determining or choosing effective constraints, which is learned, is explained now. Since the number of learnt constraints might be overwhelming, strategies to choose effective ones are of vital importance. Our approach is simple but effective: it may count how many conflicts could be avoided if the additional non-ground constraints were already included in the input program.

Each ground nogood that is violated during a run of CDNL belongs to a class of nogoods that share the same non-ground nogood. When running the Algorithm of Fig. 2 upon such a nogood violation, the lists of learned non-ground nogoods are associated with this class. When conflict generalization terminates, the learned nogoods are printed together with the number of violations of their associated non-ground nogood, s.t. a (human) user can then select the most useful constraints.

Since learned constraints can of course be equivalent to each other when variables are renamed, only one unique representation of each nogood is remembered. For example, the class of ground nogoods violated most often while ALPHA solves the HCP (see before) is identified by the nonground nogood $\{T\,personTOroom(P1, R),\ T\,personTOroom(P2, R),\ P1 < P2\}$.

Every UIP provides the opportunity to learn a constraint. Focusing on the first and last UIP is advantageous, because ground CDNL very successfully learns only from the first UIP, and because constraints from the last UIP also to be useful since they contain the decision from the current decision level. Investigating the usefulness of other UIPs, and finding other quality criteria to discriminate among learned constraints, could be also advantageously.

To increase efficiency, conflict generalization may stop after a certain time or number of conflicts and then collecting results as if the problem had been solved.

Conflict generalization is very effective even if resources were heavily limited, because the class of nogoods violated most often emerged at the very beginning of the solving process.

At the House Configuration Problem (HCP), the constraint ⟨3⟩ that can automatically be learned at the first UIP.

When continuing along the implication graph until the last UIP, two different non-ground nogoods can be learned: namely, $\Omega_{min} \cup \beta(r_{r2c}, vars(r_{r2c}))$ and $\Omega_{min} \cup B(r_{r2c})$, where:

$$\Omega_{min} = \{T \text{ cabinetTOthing}(C, T1), T \text{ personTOthing}(P1, T1),$$

$$T \text{ cabinetTOthing}(C, T2), T \text{ personTOthing}(P2, T2), P1 < P2\}$$

$r_{r2c}$: roomTOcabinet(R, C) ← roomDomain(R), *cabinet(C)*, not $\overline{\text{roomTOcabinet}(R, C)}$ In both nogoods, internal atoms can be replaced by ordinary atoms as described above to yield the following unique non-ground nogood (nogood notation and constraint notation interchangeably for learned nogoods is used) learned at the last UIP:

$$\leftarrow \text{roomTOcabinet}(R, C), \underline{\text{roomDomain}(R)}, \underline{cabinet(C)},$$

$$\text{cabinetTOthing}(C, T1), \text{personTOthing}(P1, T1),$$

$$\text{cabinetTOthing}(C, T2), \text{personTOthing}(P2, T2), P1 < P2 \qquad \langle 9 \rangle$$

This nogood contains additional literals of domain predicates (underlined for emphasis), which is the only difference to the nogood ⟨3⟩ learned at the first UIP.

Reduction of the non-minimal learned nogood is possible.

An implementation based on first-order theorem proving is conceivable, in which undecidability could be avoided by imposing a bound on the number of constants, e.g., a maximal number of entities in a configuration.

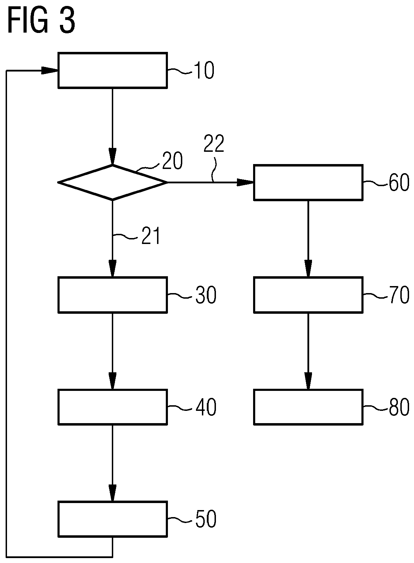

**Fig. 3** shows a flowchart of the method according to the invention.

The basic principle described before is applied to the manufacture of an item or a device or a product using several machines, which multiplicity of machines needs to be configured to manufacture the device.

The configuration includes for instance material, the manufacturing description for individual machines and necessary logistics, e.g. the transport between machines if a machine change becomes necessary.

The constraints restrict for instance assignments between the desired product and machines, materials, logistics, properties of the product.

The assignments are the output of the configuration task.

The machines are capable to execute several production steps, and the objective is to find out, which machine selection is the best option to produce the device.

The configuration task can be performed for instance by a computer with a memory.

The item or device is defined by a set of production steps, some of them can be performed sequentially and some of them in parallel. A succeeding assembly of produced sub-parts by a machine is possible.

The restrictions on valid production plans are defined by constraints.

A manufacturing plan is a problem regarding the product to be manufactured.

In step a), the CDNL technique is applied 10 to solve a provided ASP encoding stored in the memory.

The solver uses manufacturing properties of the set of production machines and a manufacturing plan for the product as a manufacturing problem.

The ASP encoding is representing the manufacturing problem including constraints.

After solving, it is checked in step b), whether a conflict exists at solving the problem in step a),
If such conflict exists 21, it is continued with step c).

Otherwise, i.e. if no conflict exists 22, it is continued with step g).

In step c) the conflict is classified 30 to obtain constraints with variables,
In step d) the known resolution technique 40 is applied to transform the constraint, in order to determine a more generalized constraint with variables at an unique implication point UIP.

In step e) the obtained constraint 50 is stored in a memory.

Subsequently, in step f) it is continued with step a).

In step g) the constraints in the memory is determined 60, which were produced from generalized conflict most often occurring. In other words, through several ASP solving runs, constraints are generated, but some are used more often that others. These constraints may provide an improved solving speed at next runs.

In step h) determined constraints from step g) are added 70 to encoding and apply CDNL technique to solve the ASP encoding.

In step i) the product is manufactured 80 using the configuration obtained by step h) with the at least one machine of the set of production machines.

**List of Reference Numerals:**

| | |
|---|---|
| 10 | solve a provided ASP encoding |
| 20 | Check whether conflict exists |
| 21 | Yes, conflict exists |
| 22 | No, no conflict |
| 30 | Conflict classification, adding variable(s) |
| 40 | Apply resolution |
| 50 | store constraints to encoding |
| 60 | determine most often occurring constraints |
| 70 | add determined constraints |
| 80 | manufacture the product |

**Claims**

1. Computer-implemented method to manufacture a product by a set of production machines with a configuration thereof, **characterized by** following steps:

   a) Apply the CDNL technique to solve (10) a provided ASP encoding stored in the memory, using manufacturing properties of the set of production machines and a manufacturing plan for the product as a manufacturing problem, wherein the ASP encoding is representing the manufacturing problem including constraints,
   b) check (20) whether a conflict exists at solving the problem in step a),

   if conflict exists (21), continue with step c), and
   if no conflict exists (22), continue with step g),

   c) classify conflict (30) to obtain constraints with variables,
   d) apply resolution technique (40) to transform the constraint, in order to determine a more generalized constraint with variables at an unique implication point,
   e) store constraint (50) in a memory,
   f) continue with step a),
   g) determine (60) the constraints in the memory, which were produced from generalized conflict most often occurring,
   h) add (70) determined constraints from step g) to encoding and apply CDNL technique to solve the ASP encoding,
   i) manufacture (80) the product using the configuration obtained by step h) with the at least one machine of the set of production machines.

2. Manufacturing system, comprising a set of production machines and a computer with a memory, **characterized in that** the computer and at least one machine of the set of production machines are configured to perform the steps of the computer-implemented method according to the preceding claim.

# FIG 1

```
{ cabinet (C) } :- cabinetDomain (C).
{ room (R) } :- roomDomain (R).
room (R1) :- roomDomain (R1), roomDomain (R2),  room (R2), R1 < R2.
cabinet (C1) :- cabinetDomain (C1), cabinetDomain (C2), cabinet (C2), C1 < C2.

{ cabinetTOthing (C, T) } :- cabinetDomain (C), thing (T).
thingHasCabinet (T) :- cabinetTothing (C, T).
:- thing (T), not thing HasCabinet (T).
:- thing (T), cabinetDomain (C1), cabinetTOthing (C1, T), cabinetDomain (C2).
      cabinetTOthing (C2, T), C1 < C2.
:- 6 <= #count { T : cabinetTOthing (C, T), thing (T) }, cabinet (C).

{ roomTocabinet (R, C) } :- roomDomain (R), cabinet (C).
cabinetHasRoom (C) :- roomTOcabinet (R, C).
:- cabinet (C), not cabinetHasRoom (C).
:- cabinet (C), roomDomain (R1), roomTOcabinet (R1, C), roomDomain (R2), roomTOcabinet (R2, C).
      R1 < R2.
:- 5 <= #count { C : roomTOcabinet (R, C), cabinetDomain (C) }, room (R).

personTOroom (P, R) :- personTOthing (P, T), cabinetTOthing (C, T), roomTOcabinet (R, C).
:- personTOroom (P1, R), personTOroom (P2, R), P1 < P2.

room (R) :- roomTOcabinet (R, C).
room (R) :- personTOroom (P, R).
cabinet (C) :- cabinetTOthing (C, T).
cabinet (C) :- roomTOcabinet (R, C).
thing (T) :- personTOthing (P, T).
```

EP 3 951 525 A1

# FIG 2

**Input:** $\omega$: the violated antecedent, $A$: current assignment
**Output:** a list of learned ground nogoods and a list of learned non-ground nogoods,
or UNSAT

1: **if** $\delta(A) = 0$ **then**
2:    **return** UNSAT
3: **end if**
4: *LearnedNoGoods* $\leftarrow$ empty list
5: *LearnedNonGroundNoGoods* $\leftarrow$ empty list
6: $\Omega \leftarrow$ non-ground nogood associated wit $\omega$
7: **while** $(l \leftarrow \text{FINDNEXTLITERALFORRESOLUTION}(\omega, A)) \neq$ **NIL do**
8:    $\omega, \Omega \leftarrow \text{RESOLVE}(\omega, \Omega, l)$
9:    **if** $\exists! \, l' \in \omega: \delta(\omega) = \delta(A)$ **then**
10:       append $\omega$ to *LearnNoGoods*
11:       append $\Omega$ to *LearnNonGroundNoGoods*
12:    **end if**
13: **end while**
14: **return** *LearnedNoGoods, LearnedNonGroundNoGoods*

15: **procedure** FINDNEXTLITERALFORRESOLUTION($\omega, A$)
16:    **return** the literal $l$ most recently assigned in $A$ that appears in $\omega$
and for which it holds that $\delta(l) = \delta(A)$ and $\alpha(l) \neq$ NIL,
or NIL if no such literal exists
17: **end procedure**

18: **procedure** RESOLVE ($\omega, \Omega, l$)
19:    $\omega' \leftarrow (\omega \setminus \{l\}) \cup (\alpha(l) \setminus \{\bar{l}\})$
20:    $L \leftarrow$ non-ground literal s.t. $\omega[i] = l$ and $\Omega[i] = L$ for some $i$
21:    $L \leftarrow$ non-ground literal s.t. $\alpha(l\,[j] = \bar{l}$ and $\Omega[j] = L$ for some $j$
22:    $\Omega' \leftarrow$ the non-ground nogood associated wit $\alpha(l)$, standarised apart from $\Omega$
23:    $\sigma \leftarrow \text{unify}(L, L)$
24:    $\sigma \leftarrow \sigma \circ \text{UNIFYDUPLICATELITERALS}(\Omega\sigma, \Omega'\sigma, \omega, \alpha(l))$
25:    $\Omega' \leftarrow (\Omega \setminus \{L\})\sigma \cup (\Omega' \setminus \{\bar{L}\})\sigma$
26:    **return** $\omega', \Omega'$
27: **end procedure**

28: **procedure** UNIFYDUPLICATELITERALS ($\Omega, \Omega', \omega, w'$)
29:    $\gamma \leftarrow \omega \cap \omega'$
30:    $\sigma \leftarrow$ empty unifier
31:    **for** $l' \in \gamma$ **do**
32:       $L \leftarrow$ non-ground literal s.t. $\omega[i] = l'$ and $\Omega[i] = L$ for some $i$
33:       $L' \leftarrow$ non-ground literal s.t. $\omega'[j] = l'$ and $\Omega'[j] = L'$ for some $j$
34:       $\sigma \leftarrow \sigma \circ \text{unify} (L\sigma, L'\sigma)$
35:    **end for**
36:    **return** $\sigma$
37: **end procedure**

FIG 3

Europäisches
Patentamt

European
Patent Office

Office européen
des brevets

# EUROPEAN SEARCH REPORT

Application Number

EP 20 19 0026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MD SOLIMUL CHOWDHURY ET AL: "SAT with Global Constraints", TOOLS WITH ARTIFICIAL INTELLIGENCE (ICTAI), 2012 IEEE 24TH INTERNATIONAL CONFERENCE ON, IEEE, 7 November 2012 (2012-11-07), pages 73-80, XP032357092, DOI: 10.1109/ICTAI.2012.19 ISBN: 978-1-4799-0227-9 * page 73 - page 77 * * page 79 * ----- | 1,2 | INV. G05B19/418 |
| A | LUCAS BORDEAUX ET AL: "Propositional Satisfiability and Constraint Programming", ACM COMPUTING SURVEYS, ACM, NEW YORK, NY, US, US, vol. 38, no. 4, 25 December 2006 (2006-12-25), pages 12-es, XP058090582, ISSN: 0360-0300, DOI: 10.1145/1177352.1177354 * page 1 - page 2 * * page 5 - page 12 * * page 25 - page 27 * * page 29 - page 32 * * page 34 - page 35 * ----- | 1,2 | |

TECHNICAL FIELDS
SEARCHED        (IPC)

G05B

The present search report has been drawn up for all claims

| Place of search | Date of completion of the search | Examiner |
|---|---|---|
| Munich | 10 February 2021 | Camba, Sonia |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **FABER, W. ; PFEIFER, G. ; LEONE, N.** Semantics and complexity of recursive aggregates in answer set programming. *Artif. Intell.,* 2011, vol. 175 (1), 278-298
- **CALIMERI, F. ; FABER, W. ; GEBSER, M. ; IANNI, G. ; KAMINSKI, R. ; KRENNWALLNER, T. ; LEONE, N. ; MARATEA, M. ; RICCA, F. ; SCHAUB, T.** ASP-Core-2 input language format. *Theory Pract. Log. Program.,* 2020, vol. 20 (2), 294-309
- Efficient conflict driven learning in a Boolean satisfiability solver. **LINTAO ZHANG ; MADIGAN, C. F. ; MOSKEWICZ, M. H. ; MALIK, S.** ICCAD. IEEE, 2001, 279-285
- Handbook of Satisfiability. IOS Press, 131-153
- **GEBSER, M. ; KAUFMANN, B. ; SCHAUB, T.** Conflict-driven answer set solving: From theory to practice. *Artif. Intell.,* 2012, vol. 187, 52-89
- **MITCHELL, T. M. ; KELLER, R. M. ; KEDAR-CABELLI, S. T.** Explanation-based generalization: A unifying view. *Mach. Learn.,* 1986, vol. 1 (1), 47-80
- **DEJONG, G. ; MOONEY, R. J.** Explanation-based learning: An alternative view. *Mach. Learn.,* 1986, vol. 1 (2), 145-176
- Explanation-based generalization in a logic-programming environment. **HIRSH, H.** IJCAI. Morgan Kaufmann, 1987, 221-227
- **MITCHELL, T. M.** Machine learning. McGraw-Hill Series in Computer Science, 1997
- **RUSSELL, S. J. ; NORVIG, P.** Artificial Intelligence - A Modern Approach. Pearson Education, 2010
- **VAN HARMELEN, F. ; BUNDY, A.** Explanation-based generalization = partial evaluation. *Artif. Intell.,* 1988, vol. 36 (3), 401-412
- **WEINZIERL, A.** Learning non-ground rules for answer-set solving. *2nd Workshop on Grounding and Transformations for Theories With Variables,* 2013, 25-37
- **FRIEDRICH, G. ; RYABOKON, A. ; FALKNER, A. A. ; HASELBOECK, A. ; SCHENNER, G. ; SCHREINER, H.** Re)configuration using answer set programming. *Configuration Workshop, CEUR-WS.org,* 2011, https://sites.google.com/view/aspcomp2019/problem-domains
- Knowledge-based (re)configuration of complex products and services. **RYABOKON, A.** Ph.D. thesis. Alpen-Adria-University Klagenfurt, 2015
- Blending lazy-grounding and CDNL search for answer-set solving. **WEINZIERL, A.** LPNMR, LNCS. Springer, 2017, vol. 10377, 191-204
- **SHEPHERDSON, J. C.** Negation as failure: A comparison of Clark's completed data base and Reiter's closed world assumption. *J. Log. Program.,* 1984, vol. 1 (1), 51-79
- **BOGAERTS, B. ; WEINZIERL, A.** Exploiting justifications for lazy grounding of answer set programs. *IJCAI. ijcai.org,* 2018, 1737-1745
- Techniques for efficient lazy-grounding ASP solving, in DECLARE. **LEUTGEB, L. ; WEINZIERL, A.** LNCS. Springer, 2017, vol. 10997, 132-148